Europäisches Patentamt

(19) **European Patent Office**

**Office européen des brevets**

(11) Publication number: **0 134 545**

**A1**

(12) # EUROPEAN PATENT APPLICATION

(21) Application number: **84109287.7**

(51) Int. Cl.⁴: **F 16 G 3/10**

(22) Date of filing: **04.08.84**

(30) Priority: **08.08.83 US 520934**

(43) Date of publication of application:
**20.03.85 Bulletin 85/12**

(84) Designated Contracting States:
**DE GB SE**

(71) Applicant: **The B.F. GOODRICH Company
Dept. 0015 WHB-6 500 South Main Street
Akron, Ohio 44318(US)**

(72) Inventor: **Worcester, Winthorp Sargent
991 Tweed Drive
Akron Ohio 44319(US)**

(72) Inventor: **Eroskey, Richard Edwin
305 North River Road
Munroe Falls Ohio 44262(US)**

(74) Representative: **von Kreisler, Alek, Dipl.-Chem. et al,
Deichmannhaus am Hauptbahnhof
D-5000 Köln 1(DE)**

(54) Spliced, reinforced urethane articles.

(57) A reinforced urethane article such as a belt is spliced together. One end of the article has fingers which engage fingers of the remaining article end. An adhesive binds the fingers together to form the splice. A particular area of use includes splicing of conveyor belts.

## SPLICED, REINFORCED URETHANE ARTICLES

### TECHNICAL FIELD

The present invention relates to a spliced, reinforced polyurethane article wherein fingers on each article end are adhered together.

### BACKGROUND ART

Heretofore, in the field of fabric reinforced urethane belts, four general types of splices have been utilized. One type of splice is the overlap splice. This splice merely related to overlapping one end of an article with the remaining end and maintaining them together as through an adhesive or a mechanical fastener, for example, a staple. A disadvantage of this type splice is that it is uneven.

An alligator clip type splice relates to the use of staples which are embedded in one end of an item. The remaining end of the staple engages a pin. The other end of the item also has a staple therein with the free end thereof engaging the remaining side of the pin. Thus, the pin would mutually engage the staples of both ends and thereby connect the article together.

Another commonly used type splice is the skive splice. In this splice, the ends of the article or articles are cut at an angle with respect to the horizontal and matingly engage one another. They are held together through the use of an adhesive.

The last common type of splicing often referred to as a mechanical splice relates to a

0134545

plate located on the top as well as another plate located on the bottom of the ends of an article or articles. A bolt or other fastener extends between the two plates and forms a crimp or pressure engagement to form the splice.

Generally, while such splices have served in a somewhat adequate capacity, they generally possess low tensile strength and hence can be readily separated when subjected to a large force. Moreover, the mechanical splice as well as the alligator clip type splice generally have exposed metal surfaces which can dull objects such as a knife being used upon the surface of the item. Additionally, they can be displaced or moved when a metal object such as a knife is used thereon.

## BRIEF DESCRIPTION OF DRAWINGS

For a better understanding of the invention described herein, reference is made to the attached drawings, wherein:

Fig. 1 is a top plan view showing a splice according to the present invention;

Fig. 2 is a top plan view showing an alternate type splice according to the present invention; and

Fig. 3 is a cross-sectional view taken on line 3-3 of Fig. 1 showing the spliced reinforced urethane article.

## BEST MODE FOR CARRYING OUT THE INVENTION

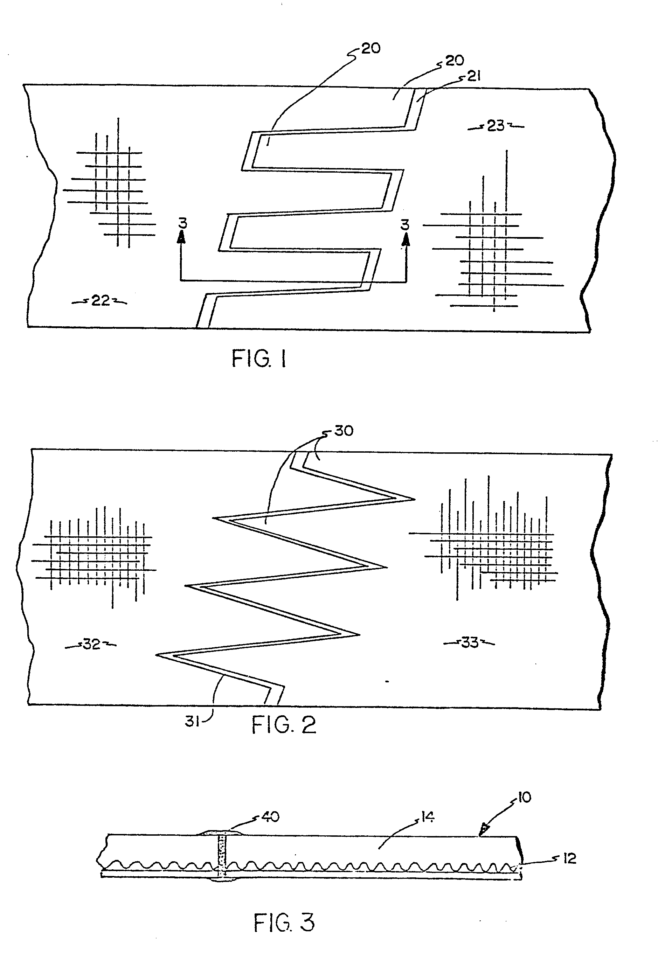

A typical reinforced urethane article is shown in Fig. 3, generally indicated by the numeral 10, containing a reinforcing ply 12 therein. Ply

0134545

12 is generally made from a fabric such as nylon, Kevlar, polyester, or fiberglass, with polyester usually being preferred. Although more than one ply can be utilized, generally only one ply is needed. The urethane component 14 can generally be any conventional or common urethane known to the art. Generally, the polyurethane elastomer is made in a conventional manner such as in the form of a low molecular weight polymer basic intermediate with hydroxyl end groups. This may be a polyester, a polyether, or a mixed polyester-polyamide. The basic intermediate is then reacted with a diisocyanate, preferably an aromatic diisocyanate, to yield a prepolymer. Numerous diisocyanates can be utilized such as 2,4-tolylenediisocyanate, pp-diphenylmethane diisocyanate, and the like. Such an elastomer is applied to ply 12 such that it usually impregnates the ply as well as encapsulates it. The urethane is then cured by chain extension which results from a reaction between the isocyanate end groups and a curing agent such as a glycol, diamine, diacid, or an amino alcohol. Urethane article 10 can have a polyester weave having greater strength warp cords than weft cords, based upon per linear inch of width, and be made from a polyurethane such as Vibrathane 6020, manufactured by Uniroyal, or Multrathane F 242, manufactured by Mobay. Both polyurethanes are essentially polyester-based and utilize butane diol as the curing agent.

According to the present invention, greater pickup or load with regard to the common surface area is accomplished. The net result is that the spliced area more nearly approaches the fabric strength. As apparent from the drawings, the present invention relates to the utilization of fingers 20 which desirably matingly engage each other through ends 22 and 23. According to the embodiment of Fig. 1, the fingers are of the squared-off type. That is, the ends thereof are essentially squared off or extend at a small angle with regard to the long edge of the article. In reality, fingers 20 of the embodiment of Fig. 1, or a portion thereof, have a slight taper such that they are thicker at their base point than at their end portion. A small, generally uniform gap 21 exists between the fingers. When an adhesive is applied to the finger area, it will penetrate the gap as well as the upper and lower surfaces of the article and form a good bond.

Considering the embodiment of Fig. 2, in this embodiment, fingers 30 are generally tapered throughout their length, that is from their wide base portion to their narrow tip portion and matingly engage corresponding or similarly shaped figures on the other end of the article or the remaining article. The tapered embodiment of Fig. 2 is preferred in that it yields greater surface areas so that a better bond between end portion 32 and the remaining end portion 33 of an article, for example a conveyor belt. The length of the fingers can vary but generally extend to a length such that there is a balance between the fabric strength and the adhesive strength. In other words, the taper of the fingers is such that a surface area exists that when adhered with an adhesive, yields a joint or connection strength approaching or even exceeding the fabric strength of the ply. As with the embodiment of Fig. 1, a small, generally uniform gap exists between the fingers. An adhesive is then applied to gap 31 as well as over and beneath article end portions 32 and 33, as in Fig. 3, to form a splice.

Although specific styles of fingers or engagements between two end portions are shown in Figs. 1 and 2, it is to be understood that the present invention is not limited thereto. Rather, any style finger can be utilized such that the surface area is increased to accommodate a larger load transfer. Moreover, it is preferred that the fingers are cut such that they traverse a reduced number of warp cords, as in Fig. 2. In other words, an abrupt break in fabric continuity should be held to a minimum or eliminated. Thus, it is not within the present invention to produce a splice wherein one continuous straight cut exists across the entire article as for example at a 22 degree angle. Rather, fingers are desirable which extend in the direction of the warp cords and traverse said cords at a shallow or acute angle, generally less than 20 degrees, and desirably less than 15 degrees. In other words, although fingers 20 of Fig. 1 do have a slight taper such that they do cut some warp cords, the embodiment of Fig. 2 is preferred wherein all of the warp cords are cut at a shallow angle, that is at an angle almost parallel to the direction of the warp cords. The angle of the finger tips and base across the article can generally be any angle although 22 1/2 degrees is preferred.

Adhesive 40 can generally be any type of adhesive but preferably is a curable or vulcanizable urethane. Thus, it can even be the same material as utilized in making of the fabric reinforced article. A suitable adhesive is Catapol SR 90, manufactured by Arnco. Essentially, this is a 100 percent total solids polyester-based urethane adhesive system using a glycol, for example butane diol as the curing agent.  Solvent adhesives are generally not preferred due to severe blistering  during cure.  Naturally, the curing agent is cured at its cured temperature which will vary depending upon the exact adhesive utilized.

The present invention can be utilized to splice two ends of the article together, as for example a belt, such as a conveyor belt, etc., to form an integral object.  Also, it can be utilized to splice together two ends of two different polyurethane articles.

The present invention can be utilized wherever fabric reinforced urethane articles such as belts have previously been utilized, as for example, conveyor belts for carrying various materials wherein high abrasion resistance, and cut resistance is desired.  One such area of use is in the conveying of green, that is unbaked, bricks. Generally, reinforced urethane belts usually have one ply but should two plies be utilized, the present invention can also be utilized.

The present invention will be better understood by reference to the following examples.

A polyester, reinforced urethane belt is cut according to a style set forth in Fig. 2.  That is, the fingers tapered continuously from their base to their tip, a distance of approximately 5 inches.  A small space or uniform gap, for example 1/16-1/8 inch, is cut between the fingers of adjacent portions.  The belt is a Novitane CU-85 conveyor belt manufactured by B.F. Goodrich, having a Nylock polyester ply therein.  The belt is then placed on a plywood sheet having release paper thereon.  The fingers of the two end portions are

0134545

then aligned. Also, a brad is inserted into various adjacent fingers where necessary to maintain even spacing. Desirably, the belt is preheated. Next, an adhesive is poured into the finger gaps. The adhesive is a precatalyzed polyurethane elastomer, Catapol SR 90A, manufactured by Arnco, South Gate, California. A sufficient amount of said adhesive is poured in the gaps to be sure that the gaps are filled. Desirably, the adhesive is heated slightly, as for example, to about $150^{O}F$ to $210^{O}F$, and preferably about $175^{O}F$ to reduce its viscosity and aid in pouring. Another piece of release paper was placed on top of said splice. A piece of sheet steel was then placed on top of this. Cure was made at $280^{O}F$ for approximately two and one half hours with only slight pressure being necessary. The belt splice was further cured by ambient air.

In a similar manner, other splices were made including splices of the style set forth in Fig. 1. After 7 days, said splices were tested and yielded the following results:

### TABLE I

#### Tensile Strength (Pounds Per Inch of Width)

| | |
|---|---|
| Fig. 1 | 507.5 |
| Fig. 2 | 622.5 |
| Control (non-spliced area) | 750 |

As apparent from Table I, the tensile strength per inch of width of the totally tapered embodiment, that is Fig. 2, was substantially higher than the squared type finger embodiment of Fig. 1. Moreover, other splices having a continuous

0134545

taper as in Fig. 2 have yielded tensile approaching that of the control, that is an un-spliced area of a belt.

While in accordance with the patent statutes, a best mode and preferred embodiment has been illustrated, the invention is not limited thereby, the scope of the invention being limited by the scope of the attached claims.

WHAT IS CLAIMED IS:

1.  A spliced, reinforced urethane article, comprising:

a first reinforced urethane item having an end portion;

a second reinforced urethane item having an end portion;

said first urethane end portion connected to said second urethane end portion through the splice;

said first end portion having a plurality of fingers extending therefrom;

said second end portion having a plurality of fingers extending therefrom; and

said fingers connected together by an adhesive.

2.  A spliced, reinforced urethane article according to Claim 1, wherein said reinforcement is a fabric.

3.  A spliced, reinforced urethane article according to Claim 2, wherein said fingers of said first end portion matingly engage said fingers of said second end portion.

4.  A spliced, reinforced urethane article according to Claim 3, wherein at least a portion of said fingers are tapered.

5.  A spliced, reinforced urethane article according to Claim 4, wherein said fingers have a squared-off end portion.

6. A spliced, reinforced urethane article according to Claim 4, wherein said fingers have a taper from their base portion to their tip.

7. A spliced, reinforced urethane article according to Claim 6, wherein a gap exists between said fingers, and said adhesive resides within said gap, and wherein said adhesive is a urethane-based adhesive.

8. A spliced, reinforced urethane article according to Claim 4, wherein said fingers are tapered throughout their entire length a distance such that there is an approximate balance between the strength of said fabric and the strength of said connecting cured adhesive.

9. A spliced, reinforced urethane article according to Claim 7, wherein said fingers are tapered throughout their entire length a distance such that there is an approximate balance between the strength of said fabric and the strength of said connecting adhesive.

10. A spliced, reinforced urethane article according to Claim 6, wherein said article is in the form of a belt.

11. A spliced, reinforced urethane article according to Claim 9, wherein said article is in the form of a belt.

12. A spliced, reinforced urethane article according to Claim 4, wherein said fabric is in the form of at least one ply having weft and warp cords and wherein said fabric is made of polyester.

13. A spliced, reinforced urethane article according to Claim 11, wherein said fabric is in the form of at least one ply having weft and warp cords and wherein said fabric is made of polyester.

14. A spliced, reinforced urethane article according to Claim 12, wherein said taper forms an acute angle with said warp cords.

15. A spliced, reinforced urethane article according to Claim 13, wherein said fabric is in the form of at least one ply having weft and warp cords and wherein said fabric is made of polyester.

FIG. I

FIG. 2

FIG. 3

## DOCUMENTS CONSIDERED TO BE RELEVANT

| Category | Citation of document with indication, where appropriate, of relevant passages | Relevant to claim | CLASSIFICATION OF THE APPLICATION (Int Cl 4) |
|---|---|---|---|
| X | GB-A-2 074 288 (DEACON) <br><br> * Page 2, line 84 - page 3, line 13; figure 1 * | 1-4,10 -13,15 | F 16 G 3/10 |
| A | GB-A- 901 197 (B.B.A.) <br> * Page 2, line 46 - page 3, line 22; figures 1,2 * | 3-11 | |
| A | BE-A- 628 473 (PIRELLI) <br><br> * Page 4, line 17 - page 5, line 20; figures 1,2 * | 5,7,10 ,11 | |
| A | US-A-4 010 655 (POLLARD) <br><br> * Column 3, lines 12-47; figure 1 * | 2,10- 13,15 | **TECHNICAL FIELDS SEARCHED (Int. Cl.4)** |
| A | FR-A-1 280 735 (KLEBER-COLOMBES) | | F 16 G <br> B 65 G |
| A | FR-A-1 417 664 (RUSSELL) | | |

The present search report has been drawn up for all claims

| Place of search THE HAGUE | Date of completion of the search 12-11-1984 | Examiner BARON C. |
|---|---|---|